# EUROPEAN PATENT APPLICATION

(11) **EP 1 724 043 A1**
(43) Date of publication of application: **22.11.2006**
(21) Application number: 05010706.9
(22) Date of filing: 18.05.2005
(51) Int. Cl.: B23D 29/00, B25F 5/00, B21J 15/20, A01G 3/033

(54) **Hydraulic shears or similar tools with a piston driven by a linear electric motor**

(71) Applicant: Koennecker, Gerd Friedrich Guenter, Dr., Galway (IE)
(72) Inventor: Koennecker, Gerd Friedrich Guenter, Dr., Galway (IE)

(57) **Abstract**

Current hydraulically operated cutting and pressing equipment is heavy, complex, and requires extensive application of precision engineering, making it expensive to manufacture and preventing it being portable. The current invention is used for a cutting or shearing action and any other similar pressing action and uses a secondary hydraulic piston operating the cutting head powered by a primary piston powered by any form of linear motor (linear motor, reluctance motor, solenoid or combination of solenoids.)

## Description

The present invention relates to shears, pliers or any other tool with a cutting, pressing or crimping action being operated by hydraulic pressure provided by a motor.

Hydraulically operated shears and tools are not new, they require however an electric rotary motor, a hydraulic pump, and are complex mechanically, requiring expensive precision parts and manufacture, and are too heavy to make them easily portable. Their use is for example in workshops or emergency vehicles which provide the necessary power.

The object of the current invention is to provide easy and light weight portable cutting, pressing, crimping etc. ability, in the main powered by batteries, and dispense with the complex system of motor, pump and valves traditionally required.

To this end the cutting etc. part (the working part) of the invention is actuated by a simple hydraulic (the secondary) piston of the required dimensions and stroke, which may be varied depending on the required force and size of the tool. The primary force is provided by a piston with a smaller diameter driven by a linear motor. This can be in the form of a linear electric motor, a reluctance motor, a solenoid or a combination or arrangement of solenoids.

The length of stroke of the primary piston is directly related to the working length of the linear motor, and both stroke and diameter are infinitely variable and adaptable to the required purpose and force. Especially a reluctance motor is adaptable to any length of stroke. As the only connection between the primary piston and the tool head required is a thin hydraulic line, the tool head (the working part) can be very lightweight while the motor, primary piston and battery can be combined in a separate power pack, which can be for example worn suspended over the shoulder or provided with wheels, these being only two examples. Due to the very few moving parts the tool can be manufactured cheap and easy, and will require minimal maintenance. Due to electric power only being required in pulses battery life should be extensive. Mains electrical power can be easily added via a supply cable and transformer. Simple electric switches for control will require minimal manual force. The principle is also applicable in stationary or bench tools.

Envisaged used are:
1. Horticultural, as pruning and cutting shears, where the light weight and lack of required manual force will allow extended working even for people with disabilities.
2. Kitchen use, domestic and industrial, and in the meat and poultry processing industry.
3. Construction industry, especially for bolt cutting and cutting of constructional iron mesh as used in concrete.
4. Military use for easy portable wire cutting, requiring no force and minimal movement.
5. Medical use, for cutting of bone, for example in the rib cage. The cutting head can easily be constructed to be detachable and can then be sterilised, the hydraulic power line can covered in a sterile disposable sleeve.
6. Underwater use, as the motor parts can be easily sealed, or for use in environmentally difficult conditions as the tool can easily be ruggedised.
7. Metal working industry, e.g. for sheet metal cutting.
8. Light emergency cutting work.
9. Textile and clothing industry, for heavy materials like leather etc. and application of rivets and press studs.

## Claims

1. Portable or stationary shears (or other action where two parts of a tool press together) operated by hydraulic piston ( secondary piston),
**characterised in that** the operating hydraulic pressure is supplied by a primary piston driven by a linear electric motor, be it linear motor, solenoid, arrangement of solenoids or reluctance motor, driven by a battery ( portable) or battery combined with mains supply electricity (portable) or mains supply (stationary), and is
**characterised in that** the primary and secondary pistons need only a single hydraulic line, no return flow being necessary, and is
**characterised in that** depending on application the adjustment of size and stroke of the primary piston and motor length and secondary piston allows an infinite range of power and cutting ( or other) capacity.

2. The device is further
**characterised in that** the few moving parts allow for economical manufacture and minimal maintenance, and is adaptable to many different usages.

3. The device is also further
**characterised in that** it can be constructed and scaled to be highly portable, and is further
**characterised in that** power consumption is low due to the short pulse of electrical power required for the working stroke, the return stroke being easily accomplished by mechanical spring power.
